# EUROPEAN PATENT SPECIFICATION

(11) **EP 3 539 736 B1**
(45) Date of publication and mention of the grant of the patent: **06.04.2022**
(21) Application number: 19161821.4
(22) Date of filing: 11.03.2019
(51) Int. Cl.: B25J 9/08, B25J 21/00, B23P 21/00, B23Q 37/00, B23Q 1/00

(54) **ROBOTIZED WORKPLACE CELL**
ROBOTISIERTE ARBEITSPLATZZELLE
CELLULE DE LIEU DE TRAVAIL ROBOTISÉE

(30) Priority: 15.03.2018 CZ 20180134
(43) Date of publication of application: 18.09.2019
(73) Proprietor: Acam Solution s.r.o., 69002 Breclav (CZ)
(72) Inventor: Bortlik, Pavel, 69141 Breclav (CZ); Simurda, Jan, 75311 Orlova-Mesto (CZ); Schoula, Simon, 58901 Trest (CZ); Bortlik, Radomir, 69141 Breclav (CZ); Honc, Lukas, 56802 Opatovec (CZ)
(74) Representative: Dadej, Leopold

(56) References cited:
- EP-A2- 1 961 514
- WO-A1-03/080288
- CN-A- 105 522 590
- JP-A- 2008 213 131
- US-A1- 2004 255 449

## Description

### Technical Field

The invention relates to the field of production robotization, especially the robotization focused on small and middle-sized enterprises with small series production.

### Background Art

Currently, robotized workplaces have been mostly used in practice, specialized for defined work operations on production lines, particularly in the larger enterprises. In small series production, the use of robotized workplaces has only been exercised to a small degree, especially in regard to the high cost and the required scalability of these workplaces.

Known are e.g. the robotic cells with freely distributed technological devices. These basic types of robotic cells are able to be modified according to a specific class of technology (welding, gluing, cutting, soldering, etc.), complexities of the technological process, complexities and sizes of the product, time demands, the necessary production tact and so forth. There are also possible various modifications of this basic performance, especially with a workplace with freely distributed technological devices, for example, two or more robots mutually connected together across a storage table, a robot with rollers, i.e. on the 7^{th} axis, controlled from the driver's cabinet of the robot, the robot suspended vertically or horizontally downwards, securing the loading site with safety rolling doors, more loading sites, each of which can be fitted with a positioner of various types. The robotic cells can be integrated into existing technology lines, and the line can be retrofitted with the necessary, subsequent technology.

Another well-known solution is the Universal robotic cell for loading and unloading parts, introducing the simple and affordable CNC automatization. The system has a loading table, which can rotate and is equipped with standard rasterized tiles, which cover the complete range of the parts with a dimension of 10 mm up to 230 mm. On the machine side, the six-axis robot loads and unloads the parts from the rasterized tiles. The finished parts can simultaneously be removed on the back side of the rasterized plates and replaced with new semi-finished products for machining. This gives the user a series of important benefits. The robot can uninterruptedly continue working from the raster on the side of the machine and it is then possible to fully make use of the machine's capacity. The operation staff can simultaneously and uninterruptedly prepare the new series on the back side of the cell. It does not interfere with the work space of the robot or the machine. This concept guarantees that the robotic cell does not occupy too much space. With the help of a pallet truck or a fork-lift truck, the robotic cell can be easily moved to other machines.

In WO03/080288A1 a robotized workplace cell, comprising a base frame equipped with sheathing, connectible components for connecting interchangeable peripheral modules, interchangeable peripheral modules, a software and hardware interface with its corresponding counterpart with components for transmitting data, electrical and pneumatic energy is disclosed. The base frame of the robotized workplace cell has shape of a regular, hexagonal or octagonal prism and is at least on one of its side, planar surfaces equipped with at least one clamping system, with a software and hardware interface with components for transmitting data, electrical and pneumatic energy, adapted for the connection of interchangeable peripheral modules.

### Summary of Invention

The object of the present invention is to provide a device, enabling the use of the principle of unified, modular cells of a robotic workplace with connectible and interchangeable peripheral modules for the required functionality with a universal software and hardware interface.

A robotized workplace cell comprises a base frame equipped with sheathing, interchangeable peripheral modules, connectible components for connecting the interchangeable peripheral modules to the base frame, the connectible components comprising a software and hardware interface and a corresponding counterpart with components for transmitting data, electrical and pneumatic energy. The base frame has the form of a regular five-to-eight-sided prism equipped on at least one of its side planar surfaces with at least one clamping system and with the software and hardware interface including components for transmitting data, electrical and pneumatic and adapted for the connection of an interchangeable peripheral module. The counterpart of the software and hardware interface is provided on the interchangeable peripheral modules and includes components for transmitting data, electrical and pneumatic energy, so as to connect the front surface of the individual interchangeable peripheral modules with the at least one side planar surfaces of the base frame.

According to the invention, the clamping system on the at least one of the side planar surfaces of the base frame consists of a clamp and a holder of the clamp in which opening is formed with a diameter facilitating the tight arrangement of the clamp in the opening, the clamp cooperating with an arbor of one of the interchangeable peripheral modules, wherein the base frame further comprises casing guides receiving guide pins of the interchangeable peripheral modules for guiding the base frame and the interchangeable peripheral modules into a precise, interrelated position for their connection, wherein the clamp is a circular pneumatic clamp of the type used for accurately inserting workpieces into machining centers. For the assurance of the even distribution of forces, stiffness of the construction and the precision of the base frame in all load-bearing directions, the side planar surfaces of the base frame preferably have a square shape. Self-guiding connectors are preferably used to facilitate the connection of the software and hardware interface with the corresponding counterpart for the transmission of data, electrical and pneumatic energy between the interchangeable peripheral modules and the base frame of the robotized workplace cell. For guiding the interchangeable peripheral modules and the base frame of the cell into a precise interrelated position for their connection, the guide pins preferably have a conical projection on at least a portion of a contact surface. For adjusting the height of the interchangeable peripheral modules, what is necessary for the precise connection of the modules to the base frame of the robotized workplace cell, these modules are preferably equipped with height-adjustable module wheels.

The above stated modular solution concept for the robotized workplace provides both small and middle-sized enterprises the opportunity to react very quickly to the demanding changes of production. With the use of the present invention, there is an overall shortening of the necessary time for the realization or reconfiguration of a robotized workplace for the production of a new product.

### Brief Description of Drawings

The invention will be more clearly explained with the help of the drawings, where;
Fig. 1 represents the entire view of the robotized workplace cell with one interchangeable peripheral module,
Fig. 2 represents the front view of the robotized workplace cell,
Fig. 3 represents the floor plan view of the robotized workplace cell,
Fig. 4 represents the front view of the contact surface of the interchangeable peripheral module,
Fig. 5 represents the detail of the circular pneumatic clamp with an arbor,
Fig. 6 represents the detail of the connecting part of the contact surface of the interchangeable peripheral module,
Fig. 7 represents the detail of the guide pin connected to a casing guide of the cell,
Fig. 8 represents the detail of the attached, height-adjustable wheels of the interchangeable peripheral module,

### Description of Embodiments

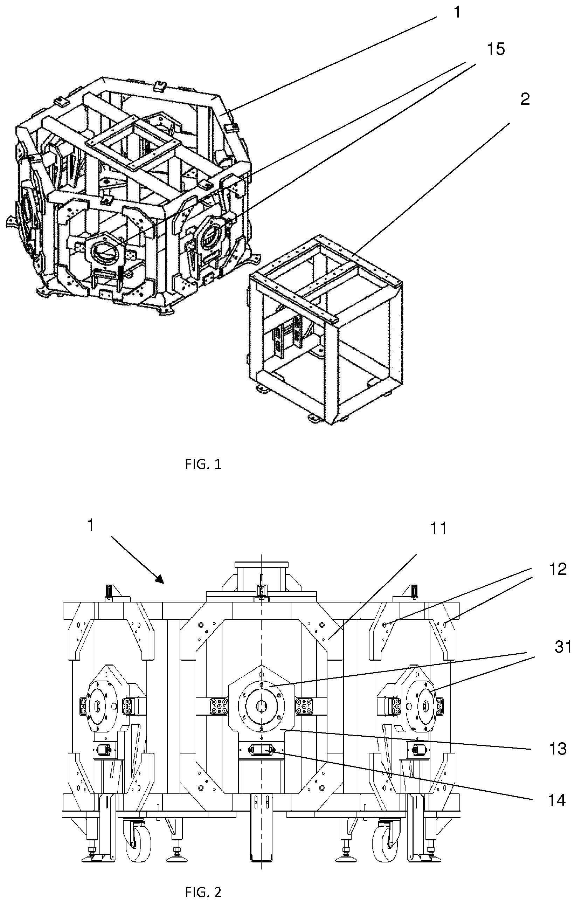

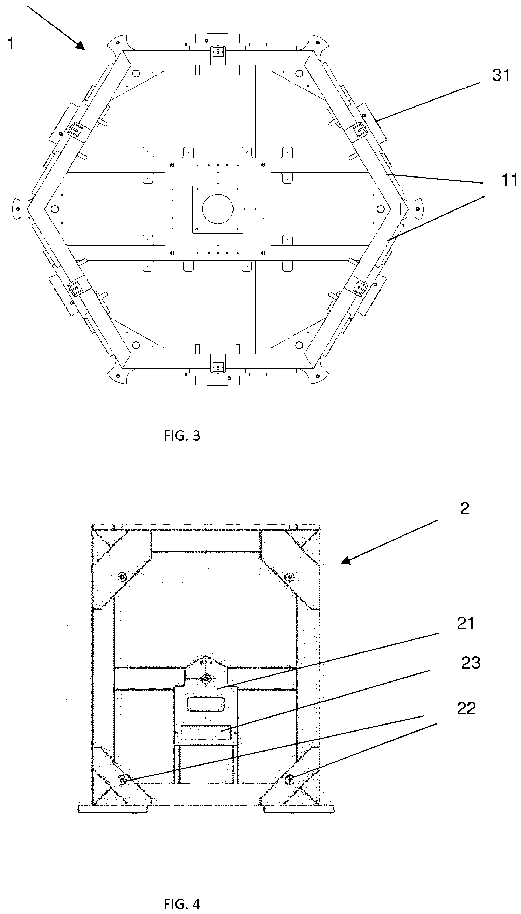

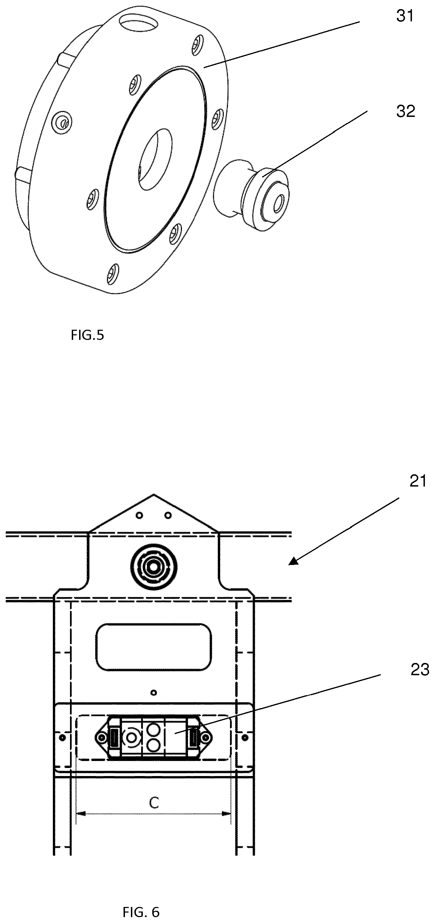

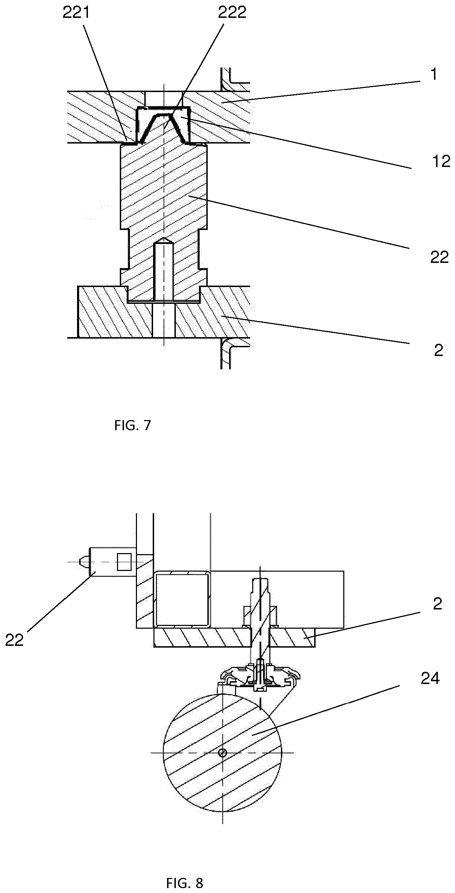

The robotized workplace cell according to Fig. 1 to Fig. 8, comprises a base frame equipped with a sheet metal sheathing, interchangeable peripheral modules 2, connectible components for connecting the interchangeable peripheral modules to the base frame 1, software and hardware interfaces 14 with components for transmitting data, electrical and pneumatic energy arranged on the base frame 1 and their counterparts 23 arranged on the front contact surface of the interchangeable peripheral modules 2. The base frame 1 of the robotized workplace cell is spatially welded and consequently it is precisely machined in the shape of a regular hexagonal prism with the side planar surfaces 11 having a square shape. The side planar surfaces 11 of the hexagonal prism are adjusted to be connected to the interchangeable peripheral modules 2 with the help of a clamping system and the software and hardware interface 14 with components for transmitting data, electric and pneumatic energy to its counterpart 23. The clamping system for connecting the interchangeable peripheral modules 2 of this cell consists of a clamp placed on the side planar surfaces 11 of the base frame 1, and of a holder 13 of the pneumatic clamp 31 in which a circular opening 15 is formed with a diameter facilitating the tight arrangement of the circular pneumatic clamp 31. Furthermore, this pneumatic clamp 31 cooperates with an arbor 32 of an interchangeable peripheral module. Moreover, casing guides 12 and guide pins 22 are provided for guiding the peripheral modules 2 and the base frame 1 of the cell into a precise interrelated position for their connection, each pin having a conical projection 222 formed on its front contact surface 221, which along with the shape of the casing guides 12 formed on the side wall 11 of the base frame 1 of the cell, enables the accurate routing of the robotic workplace cell misaligned in the tolerance field of several millimetres and the compensation for the non-parallelism of the connecting surfaces during guidance. The counterpart 23 of the software and hardware interface 14 is provided on the interchangable peripheral modules and includes transmission components of the electrical and pneumatic energy. These components, the pneumatic clamp 31 with the arbor 32, guide pins 22, and counterpart 23 of the software and hardware interfaces 14 with components for transmitting data, electrical and pneumatic energy, allow to connect the front contact surface of the interchangeable peripheral modules 2 with the side planar surfaces 11 of the base frame 1, which have a square shape, what 11 is meant to ensure the even distribution of forces, stiffness of the construction and precision of the base frame 1 in all load-bearing directions. As the circular pneumatic clamp 31, a pneumatic clamp for accurate loading workpieces into machining centers is used Some self-guiding connectors of the software and hardware interface 14 and its counterpart 23 are used in order to facilitate the connection to the transmission of data, electrical and pneumatic energy by the software and hardware interface. The interchangeable peripheral modules 2 are provided with height adjustable wheels 24, allowing an adjustment of the height of the interchangeable peripheral module 2 so that their guide pins 22 can be adjusted to a level just below the axis of the casing guides 12. In combination with the guidance, the cell is pressed to be guided and the cell is slightly raised to the tenth of a millimetre.

### Industrial Applicability

The robotized workplace cell, according to this invention, is applicable in the field of production robotization, especially robotization in small and middle-sized enterprises, who work with often changes of the manufacturing assortments in small series manufacturing, while the solution is lacking any limits of usefulness even in large enterprises. The robotic cell can be used independently, or it can be linked to robotized production lines.

## Claims

1. A robotized workplace cell comprising
a base frame (1) equipped with sheathing, interchangeable peripheral modules (2), connectible components for connecting the interchangeable peripheral modules (2) to the base frame (1), these connectible components comprising
a software and hardware interface (14) and a corresponding counterpart (23) with components for transmitting data, electrical and pneumatic energy, wherein the base frame (1) has the shape of a regular, five-to-eight-sided prism equipped on at least one of its side planar surfaces (11) with at least one clamping system and with the software and hardware interface (14) including components for transmitting data, electrical and pneumatic energy and adapted for the connection of an interchangeable peripheral module (2), < > ,
**characterized in that the** clamping system on the at least one of the side planar surfaces (11) of the base frame (1) consists of a clamp (31) and of a holder (13) of the clamp (31) in which circular opening (15) is formed with a diameter facilitating the tight arrangement of the clamp (31) in the opening (15), the clamp (31) cooperating with an arbor (32) of one of the interchangeable peripheral modules (2), wherein the base frame (1) further comprises
casing guides (12) receiving guide pins (22) of the interchangeable peripheral modules (2) for guiding the base frame (1) and the interchangeable peripheral modules (2) into a precise, interrelated position for their connection, < wherein the counterpart (23) of the software and hardware interface (14) is provided on the interchangeable peripheral modules (2) and includes components for transmitting data, electrical and pneumatic energy so as to connect the front contact surface of the individual interchangeable peripheral modules (2) with the at least one of side planar surfaces (11) of the base frame (1), > and wherein the clamp (31) is a circular pneumatic clamp of the type used for accurately inserting workpieces into machining centers .

2. The robotized workplace cell according to claim 1, **characterized in that** for the assurance of the even distribution of forces, stiffness of the construction and the precision of the base frame (1) in all load-bearing directions, the side planar surfaces (11) of the base frame (1) have a square shape.

3. The robotized workplace cell according to claims 1 and 2, **characterized in that** for the transmission of data, electric and pneumatic energy between the interchangeable peripheral modules (2) and the base frame (1) of the robotized workplace cell, the software and hardware interface (14) and its corresponding counterpart (23) are provided with self-guiding connectors .

4. The robotized workplace cell according to claims 1 through 3, **characterized in that** the guide pins (22) for guiding the interchangeable peripheral modules (2) and the base frame (1) of the cell into a precise interrelated position for their connection, have on a at least portion of a contact surface (221) a conical projection (222).

5. The robotized workplace cell according to claims 1 through 4, **characterized in that** the interchangeable peripheral modules (2) are provided with height adjustable wheels (24), allowing an adjustment of the height of the interchangeable peripheral modules (2), so that the guide pins (22) can be guided to a level just below the axis of the casing guides (12).

## Patentansprüche

1. Eine robotisierte Arbeitsplatzzelle mit einem mit Ummantelung ausgestatteten Grundrahmen (1), austauschbaren Peripheriemodulen (2), anschließbaren Komponenten zum Verbinden der austauschbaren Peripheriemodule (2) mit dem Grundrahmen (1), wobei diese verbindbaren Komponenten eine Software-und-Hardware-Schnittstelle (14) und ein entsprechendes Gegenstück (23) mit Komponenten zur Übertragung von Daten, elektrischer und pneumatischer Energie umfassen, wobei der Grundrahmen (1) eine Form eines regelmäßigen, fünf-bis achtseitigen Prismas aufweist, das an mindestens einer seiner Seiten-Planarflächen (11) mit mindestens einem Klemmsystem und mit der Software-und-Hardware-Schnittstelle (14) mit Komponenten zur Übertragung von Daten, elektrischer und pneumatischer Energie ausgestattet ist und zum Anschluss eines austauschbaren Peripheriemoduls (2) eingerichtet ist, **dadurch gekennzeichnet, dass** das Klemmsystem an der mindestens einen der Seiten-Planarflächen (11) des Grundrahmens (1) aus einer Klammer (31) und einer Halterung (13) der Klammer (31) besteht, in der eine kreisförmige Öffnung (15) mit einem Durchmesser ausgebildet ist, der die dichte Anordnung der Klammer (31) in der Öffnung (15) erleichtert, wobei die Klemme (31) mit einem Dorn (32) eines der austauschbaren Peripheriemodule (2) zusammenwirkt, wobei der Grundrahmen (1) ferner Gehäuseführungen (12) umfasst, die Führungsstifte (22) der austauschbaren Peripheriemodule (2) aufnehmen, um den Grundrahmen (1) und die austauschbaren Peripheriemodule (2) in eine präzise, zusammenhängende Position für ihre Verbindung zu führen, wobei das Gegenstück (23) der Software- und-Hardware-Schnittstelle (14) an den austauschbaren Peripheriemodulen (2) vorgesehen ist und Komponenten zum Übertragen von Daten, elektrischer und pneumatischer Energie umfasst, um die vordere Kontaktfläche der einzelnen austauschbaren Peripheriemodule (2) mit der mindestens einen der Seiten-Planarflächen (11) des Grundrahmens (1) zu verbinden, und wobei die Klemme (31) eine kreisförmige pneumatische Klemme der Art ist, die zum genauen Einsetzen von Werkstücken in Bearbeitungszentren verwendet wird.

2. Die robotisierte Arbeitsplatzzelle nach Anspruch 1, **dadurch gekennzeichnet, dass** zur Sicherung der gleichmäßigen Verteilung von Kräften, Steifigkeit des Aufbaus und der Präzision des Grundrahmens (1) in allen Tragrichtungen, die Seiten-Planarflächen (11) des Grundrahmens (1) eine quadratische Form aufweisen.

3. Die robotisierte Arbeitsplatzzelle nach den Ansprüchen 1 und 2, **dadurch gekennzeichnet, dass** zur Übertragung von Daten, elektrischer und pneumatischer Energie zwischen den austauschbaren Peripheriemodulen (2) und dem Grundrahmen (1) der robotisierten Arbeitsplatzzelle, die Software-und-Hardware-Schnittstelle (14) und ihr entsprechendes Gegenstück (23) mit selbstleitenden Verbindern versehen sind.

4. Die robotisierte Arbeitsplatzzelle nach den Ansprüchen 1 bis 3, **dadurch gekennzeichnet, dass** die Führungsstifte (22), zum Führen der austauschbaren Peripheriemodule (2) und des Grundrahmens (1) der Zelle in eine präzise, zusammenhängende Position für ihre Verbindung, auf zumindest einem Abschnitt einer Kontaktfläche (221) einen konischen Vorsprung (222) aufweisen.

5. Die robotisierte Arbeitsplatzzelle nach den Ansprüchen 1 bis 4, **dadurch gekennzeichnet, dass** die austauschbaren Peripheriemodule (2) mit höhenverstellbaren Rädern (24) versehen sind, die eine Einstellung der Höhe der austauschbaren Peripheriemodule (2) ermöglichen, so dass die Führungsstifte (22) knapp unterhalb der Achse der Gehäuseführungen (12) auf ein Niveau führbar sind.

## Revendications

1. Une cellule de lieu de travail robotisée comprenant un cadre de base (1) équipé d'un gainage, des modules périphériques interchangeables (2), des composants connectables pour connecter les modules périphériques interchangeables (2) au cadre de base (1), où ces composants connectables comprennent une interface logicielle et matérielle (14) et une contrepartie correspondante (23) avec des composants pour transmettre des données, de l'énergie électrique et pneumatique, où le cadre de base (1) a une forme d'un prisme régulier, de cinq à huit côtés, équipé sur au moins l'une de ses surfaces planes latérales (11) avec au moins un système de serrage et avec l'interface logicielle et matérielle (14) comprenant des composants pour transmettre des données, de l'énergie électrique et pneumatique et adapté pour la connexion d'un module périphérique interchangeable (2), **caractérisée en ce que** le système de serrage sur l'au moins une des surfaces planes latérales (11) du cadre de base (1) est constitué d'une pince (31) et d'un support (13) de la pince (31) dans lequel une ouverture circulaire (15) est formée avec un diamètre facilitant l'agencement serré de la pince (31) dans l'ouverture (15), où la pince (31) coopère avec une broche (32) de l'un des modules périphériques interchangeables (2), où le cadre de base (1) comprend en outre des guides de boîtier (12) recevant des broches de guidage (22) des modules périphériques interchangeables (2) pour guider le cadre de base (1) et les modules périphériques interchangeables (2) dans une position précise et relative pour leur connexion, où la contrepartie (23) de l'interface logicielle et matérielle (14) est disposée sur les modules périphériques interchangeables (2) et comprend des composants pour transmettre des données, de l'énergie électrique et pneumatique de façon à relier la surface de contact avant des modules périphériques interchangeables (2) individuels à l'au moins une des surfaces planes latérales (11) du cadre de base (1), et où la pince (31) est une pince pneumatique circulaire du type utilisé pour insérer avec précision des pièces dans des centres d'usinage.

2. La cellule de lieu de travail robotisée selon la revendication 1, **caractérisée en ce que** pour l'assurance de la distribution régulière de forces, la rigidité de la construction et la précision du cadre de base (1) dans toutes les directions de support de charge, les surfaces planes latérales (11) du cadre de base (1) ont une forme carrée.

3. La cellule de lieu de travail robotisée selon les revendications 1 et 2, **caractérisée en ce que** pour la transmission de données, de l'énergie électrique et pneumatique entre les modules périphériques interchangeables (2) et le cadre de base (1) de la cellule de travail robotisée, l'interface logicielle et matérielle (14) et sa contrepartie correspondante (23) sont pourvues de connecteurs autoguides.

4. La cellule de lieu de travail robotisée selon les revendications 1 à 3, **caractérisée en ce que** les broches de guidage (22), pour guider les modules périphériques interchangeables (2) et le cadre de base (1) de la cellule dans une position précise et relative pour leur connexion, ont sur au moins une partie d'une surface de contact (221) une saillie conique (222).

5. La cellule de lieu de travail robotisée selon les revendications 1 à 4, **caractérisée en ce que** les modules périphériques interchangeables (2) sont pourvus de roues réglables en hauteur (24), permettant un ajustement de la hauteur des modules périphériques interchangeables (2) de telle sorte que les broches de guidage (22) peuvent être guidées jusqu'à un niveau juste en dessous de l'axe des guides de boîtier (12).
